(19) **Europäisches Patentamt European Patent Office Office européen des brevets**

(11) **EP 3 338 985 B1**

(12) **EUROPEAN PATENT SPECIFICATION**

(45) Date of publication and mention
of the grant of the patent:
**24.07.2019   Bulletin 2019/30**

(51) Int Cl.:
**B29C 39/10** *(2006.01)*        **B29C 70/68** *(2006.01)*

(21) Application number: **17002048.1**

(22) Date of filing: **21.12.2017**

(54) **PRODUCTION PROCESS OF A WORKPIECE RACK FOR INDUSTRIAL USE AND RACK OBTAINED**

PRODUKTIONSVERFAHREN EINES GESTELLS FÜR WERKSTÜCKE FÜR DEN INDUSTRIELLEN BEDARF UND DARAUS GEWONNENES GESTELL

PROCEDE DE FABRICATION D'UN RATELIER PORTE-OBJETS A USAGE INDUSTRIEL ET RATELIER OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.12.2016   IT 201600130071**

(43) Date of publication of application:
**27.06.2018   Bulletin 2018/26**

(73) Proprietor: **Grillo, Francesco**
**10151 Torino (TO) (IT)**

(72) Inventor: **Grillo, Francesco**
**10151 Torino (TO) (IT)**

(74) Representative: **Aprà, Mario**
**Aprà Brevetti**
**Via Bertola 2**
**10121 Torino (IT)**

(56) References cited:
**WO-A2-2015/017408      GB-A- 2 240 318**
**US-A- 3 446 361      US-A- 4 297 197**

• **Anonymous: "APPLICATIONS OF PRIMERS AND VINYL PLASTISOLS", , 6 October 2010 (2010-10-06), pages 1-5, XP055391995, Retrieved from the Internet: URL:http://www.polyone.com/files/resources /Applications_of_Primers_and_Vinyl_Plastis ols_TAB_SC005.pdf [retrieved on 2017-07-18]**

**Description**

The present invention concerns a production process of a workpiece rack for industrial use. The invention also concerns a rack obtained with said process. Workpiece racks for industrial use are known and are used, for example, to prevent contact damage on semi-finished products during processing in the production line or assembly island.

Each rack is produced according to the needs of the final user and essentially comprises a solid supporting structure, made of metal, and a contact part with the objects to be held, produced on said supporting structure by means of molding, using a liquid raw material, for example plastisol.

The mold, made of steel or anodized aluminum, has a cavity that reproduces, in negative, the shape of the finished rack.

The aforesaid supporting structure consists of a metal profile, for example made of galvanized iron sheet having, for example, a thickness of 1.5 to 3.0 mm and generally in the shape of a channel with a "C" or "omega" cross section.

The known molding process, for the production of a workpiece rack for industrial use, comprises the following steps:

- providing a solid supporting structure by means of cutting, according to a predetermined length, and bending a metal profile, having a predetermined thickness, in the shape of a channel with a "C" or "omega" cross section;
- washing the mold cavity with osmosis water or steam jet at 95°C and subsequently with nitro solvent (such as nitro paint thinner);
- pouring a predetermined amount of cold liquid plastisol into the mold;
- placing the solid supporting structure in the shape of a channel in said mold;
- inserting the mold into an oven maintained at a temperature from, for example, 285 to 320 °C for the time required to harden the plastisol to the required hardness;
- removing the mold from the oven and cooling it to the extraction temperature of the finished rack, for example below 70°C.

Documents US 4,297,197 A, US 3,446,361 A, GB 2.240.318 A, WO 2015/017408 A2, and Anonymous, "APPLICATIONS OF PRIMERS AND VINYL PLASTISOLS", (20101006), pages 1 - 5, URL: http://www.polyone.com/files/resources/Applications_of_Primers_and_Vinyl_ Plastisols_TAB_SC005.pdf, (20170718), XP055391995 [A] 1,5,6 * page 1, disclose a production process of a workpiece rack for industrial use.

In particular, GB 2.240.318 A discloses a dunnage comprising a framework on which are mounted profiled strip members for retaining components to be transported to prevent damage thereto. The strip members comprise metal channel sections apertured to provide keying locations for plastics profiles moulded onto the channel members. The plastic can be polyurethane and the metal galvanised steel. An intermediate, harder, plastics layer can be provided.

However, this process does not allow the production of a rack in which the solid supporting structure and the part in contact with the semi-finished product to be held are solidly connected to each other.

Starting from the notion of the aforesaid drawback, the present invention intends to provide a remedy.

An object of the present invention is to provide a production process of a workpiece rack for industrial use, that allows the production of a rack in which the solid supporting structure and the part in contact with the semi-finished product to be held are solidly connected to each other.

Another object of the present invention is to provide a process as specified, that is simple and safe to implement.

In view of the aforesaid objects, the present invention provides a production process of a workpiece rack for industrial use, essentially characterized in that said solid supporting structure is first provided with a surface coating, forming a film of surface coating thereon by applying a liquid primer and subsequently placing said solid structure in the oven, at a temperature of 220-300 °C for 10-20 minutes, causing said film of primer to dry, so that the dried primer adheres closely to said solid structure.

The thickness of said film of primer on said solid supporting structure is in a range from 20 to 100 $\mu$m.

A further object of the present invention is to provide a workpiece rack for industrial use, obtained with the aforesaid process, in which the solid supporting structure and the part in contact with the semi-finished product to be held are solidly connected to each other.

In view of this further object, the present invention provides a workpiece rack for industrial use, essentially characterized in that said solid supporting structure comprises a film of surface coating formed by a dried primer and having a thickness in a range from 20 - 100 $\mu$m.

By means of the process according to the invention, molding of the plastisol is no longer performed in conditions of direct contact between the plastisol poured into the mold and the solid supporting structure housed in the mold, but the plastisol poured into the mold hardens in contact with the film of surface coating of the solid supporting structure, formed by the dried primer and adhering closely to said structure, which produces with the film a monolithic body.

These and other objects and advantages, which will be more apparent below, are achieved in accordance with the invention with the characteristics listed in the appended independent claim 1, relating to the production process of a workpiece rack for industrial use, and in the appended claim 8, relating to the workpiece rack for industrial use according to the invention.

Advantageous aspects of the invention will be apparent from the dependent claims.

Further characteristics and advantages of the invention will be more apparent from the detailed description below, relating, above all, to an example of a method of implementation of the production process, according to the invention, of a workpiece rack for industrial use and also relating to an embodiment given purely by way of example of the rack obtained with the aforesaid process, the present description being non-limiting.

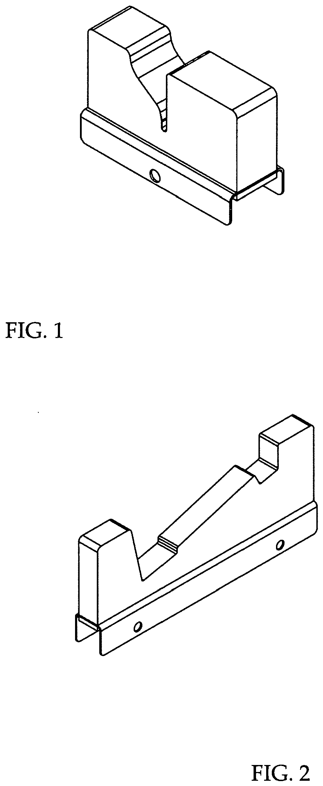

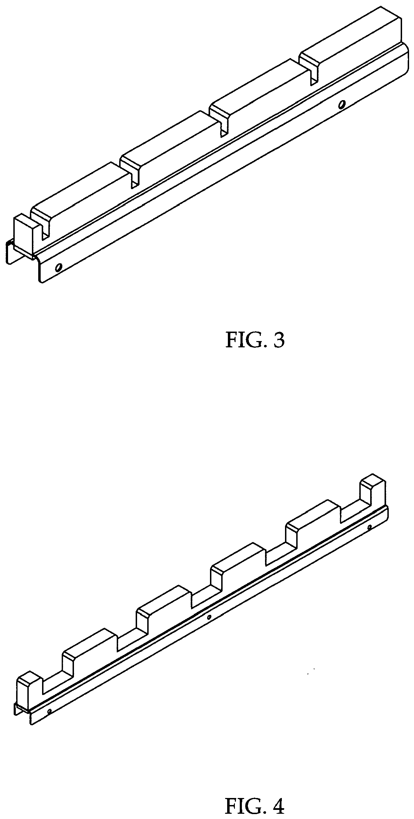

In the accompanying drawing, Figs. 1 to 4 show, respectively, by way of example and in a perspective view, four different racks for industrial use of the type specified, produced with the process according to the present invention.

The production process of a workpiece rack for industrial use essentially comprises the steps of:

- providing a mold having a cavity that reproduces, in negative, the shape of the finished rack;
- providing a solid supporting structure by means of cutting, according to a predetermined length, and bending a metal profile, having a predetermined thickness, in the shape of a channel with an essentially "C" or "omega" cross section;
- washing the mold cavity;
- pouring a predetermined amount of cold liquid plastisol into the mold;
- placing said solid supporting structure in the mold cavity according to the shape provided in said cavity;
- inserting said mold into an oven maintained at a temperature from 220 to 350 °C to harden the plastisol to the required hardness;
- removing the mold from the oven and cooling it to the extraction temperature and extracting the finished rack, for example below 70°C,

and is characterized in that it comprises a step in which:

- said solid supporting structure bent in the shape of a channel, according to predetermined thickness and length, is treated, before insertion into the mold, forming thereon a film of surface coating by applying a liquid primer and subsequently placing said solid structure in the oven, at a temperature of 220-300 °C for 10-20 minutes, causing said film of primer to dry, so that the dried primer adheres closely to said solid structure.

Advantageously, a film of primer having a thickness in a range from 20 a 100 $\mu$m is formed on said solid supporting structure.

Preferably, before pouring of the plastisol, a layer of silicone release agent is applied to the mold cavity to promote the release of the rack formed from the cavity.

The aforesaid steps of the process according to the invention are further explained, by way of example, below.

1) A linear length is cut to size from a galvanized iron profile with thickness from 1.50 to 3.00 mm according to the type of the rack to produce.

2) The length is bent in the shape of a channel ("C" or "omega" cross section), obtaining a solid supporting structure.

3) The channel is cleaned by means of a jet of high temperature phosphatized water and subsequently with nitro solvent (such as nitro paint thinner).

4) The surface coating of said channel is treated, forming thereon a film of surface coating by applying a liquid primer. The primer is applied to said channel using a brush or by spraying.

5) A heat treatment is performed on said channel with said film of surface coating applied, placing the channel in an oven, at a temperature of 220-300 °C for 10-20 minutes, causing said film of primer to dry and so that it adheres closely to said solid supporting structure in the shape of a channel.

6) A mold is provided for molding, having a cavity that reproduces, in negative, the shape of the finished rack.

7) A layer of silicone release agent is applied, for example by spraying, to the mold cavity to promote the release of the rack formed from the cavity.

8) The mold is filled with cold plastisol.

9) Said solid supporting structure in the shape of a channel is placed in the mold cavity according to the shape provided in said cavity.

10) The mold is inserted into an oven maintained at a temperature from, for example, 285 to 320 °C for the time required to harden the plastisol to the required hardness, for example around 40 minutes.

11) The mold is then removed from the oven and cooled gradually to the extraction temperature of the finished rack, for example below 70°C.

11) The finished rack is extracted from the mold and quality control is carried out.

The aforesaid process has a duration of around 90 minutes.

Generally, using an oven with dimensions equal to:

1000 mm (h) x 2000 mm (l) x 3000 mm (d) from 40 to 120 racks can be produced in each 90-minute cycle.

In particular, it can be noted that steps 4) and 5) allow the channel to be provided with a coating film formed by the dried primer, which enables the plastisol to adhere perfectly to the surface thus coated. The subsequent heat treatment of the rack in the mold forms a monolithic body, that makes it substantially impossible for the part made of plastisol and destined to come into contact with the semi-finished product to be treated to become detached with respect to the solid supporting structure in the shape of a channel coated with the dried primer.

The primer used in the process according to the invention is a liquid primer, comprising semi-transparent glues and adhesion promoters. The primer is used diluted with specific nitro thinner, which can also be used as solvent to clean the semi-finished metal workpieces.

As is known, plastisol is a suspension of PVC particles in a liquid plasticizer.

Advantageously, said solid supporting structure bent in the shape of a channel is provided with at least one hole, respectively with at least one opening in the intermediate portion thereof, and the plastisol poured into the mold is discharged, through said at least one hole, respectively said at least one opening, into the inner part of said solid supporting structure and forms, after cooling of the poured plastisol, at least one corresponding projecting body in said inner part of said solid supporting structure.

In this way, a structural reinforcement is produced in said solid structure.

Moreover, where necessary, said solid supporting structure bent in the shape of a channel is provided with structural stiffening means configured as at least one longitudinal reinforcing element welded on the intermediate portion of said solid supporting structure.

Besides, alternatively or in a complementary manner, said solid supporting structure bent in the shape of a channel is provided with structural stiffening means configured as at least one transverse reinforcing element welded on the intermediate portion of said solid supporting structure.

The workpiece rack for industrial use produced with the process according to the invention has the following characteristics.

Firstly, said solid supporting structure in the shape of a channel comprises a film of surface coating formed by a dried primer and having a thickness in a range from 20 - 100 $\mu$m.

Advantageously, said solid supporting structure bent in the shape of a channel is provided with at least one hole, respectively with at least one opening in the intermediate portion thereof, and comprises, at said at least one hole, respectively said at least one opening, in the inner part of said solid supporting structure, a corresponding projecting body formed by means of poured and cooled plastisol.

This arrangement stiffens said structure.

Moreover, when appropriate, said solid supporting structure bent in the shape of a channel comprises structural stiffening means configured as at least one longitudinal reinforcing element welded on the intermediate portion of said solid supporting structure.

Additionally or alternatively, said solid supporting structure bent in the shape of a channel comprises structural stiffening means configured as at least one transverse reinforcing element welded on the intermediate portion of said solid supporting structure.

As can be seen from the above, with the present invention it is possible to achieve the objects indicated in the introductory part.

In fact, the production process of a workpiece rack for industrial use according to the invention allows the production of a rack, in which the solid supporting structure and the contact part with the semi-finished product to be held are solidly connected to each other.

Moreover, the process of the present invention is simple and safe to implement.

Besides, with the present invention it is possible to provide a workpiece rack for industrial use, obtained with the aforesaid process, in which the solid supporting structure and the part in contact with the semi-finished product to be held are solidly connected to each other.

**Claims**

1.    Production process of a workpiece rack for industrial use, comprising the steps of:

- providing a mold having a cavity that reproduces, in negative, the shape of the finished rack;
- providing a solid supporting structure by means of cutting, according to a predetermined length, and bending a metal profile, having a predetermined thickness, in the shape of a channel with an essentially "C" or "omega" cross section;
- washing the mold cavity;
- pouring a predetermined amount of cold liquid plastisol into the mold;
- placing said solid supporting structure in the mold cavity according to the shape provided in said cavity;
- inserting said mold into an oven maintained at a temperature from 220 to 350 °C to harden the plastisol to the required hardness;
- removing the mold from the oven and cooling it to the extraction temperature and extracting the finished rack,

**characterized in that** it comprises a step in which:

- said solid supporting structure bent in the shape of a channel is provided with a surface coating, before insertion into the mold, forming a film of surface coating on the solid supporting structure by applying a liquid primer, subsequently placing said solid structure in the oven, at a temperature of 220-300 °C for 10-20 minutes, and causing said film of primer to dry, so that the dried primer adheres closely to said solid structure.

2. Process according to claim 1, **characterized in that** a film of surface coating of primer having a thickness in a range from 20 a 100 $\mu$m is formed on said solid supporting structure.

3. Process according to claim 1 and/or 2, **characterized in that**, before pouring of the plastisol, a layer of silicone release agent is applied to the mold cavity to promote the release of the rack formed from the cavity.

4. Process according to claim 1 and/or 2, **characterized in that** said primer, comprising glues and adhesion promoters, is used in liquid form, pure or diluted with nitro thinner.

5. Process according to one or more of the preceding claims, **characterized in that** it further comprises the steps of:

- providing said solid supporting structure bent in the shape of a channel with at least one hole, respectively with at least one opening in the intermediate portion thereof,
- discharging the plastisol poured into the mold, through said at least one hole, respectively said at least one opening, into the inner part of said solid supporting structure and
- forming, after cooling of the poured plastisol, at least one corresponding projecting body in said inner part of said solid supporting structure.

6. Process according to one or more of the preceding claims, **characterized in that** said solid supporting structure bent in the shape of a channel is provided with structural stiffening means configured as at least one longitudinal reinforcing element fixed on the intermediate portion of said solid supporting structure.

7. Process according to one or more of the preceding claims, **characterized in that** said solid supporting structure bent in the shape of a channel is provided with structural stiffening means configured as at least one transverse reinforcing element fixed on the intermediate portion of said solid supporting structure.

8. Workpiece rack for industrial use obtained with the process according to one or more of claims 1 to 7, **characterized in that** said solid supporting structure in the form of channel comprises a film of surface coating formed by a dried primer and having a thickness in a range from 20 - 100 $\mu$m.

9. Rack according to claim 8, **characterized in that** said primer comprises glues and adhesion promoters.

10. Rack according to one or more of claims 8 and/or 9, **characterized in that** said solid supporting structure bent in the shape of a channel is provided with at least one hole, respectively with at least one opening in the intermediate portion thereof, and **in that** it comprises, at said at least one hole, respectively said at least one opening, in the inner part of said solid supporting structure, a corresponding projecting body formed by mean of poured and cooled plastisol.

11. Rack according to one or more of the preceding claims 8 to 10, **characterized in that** said solid supporting structure bent in the shape of a channel comprises structural stiffening means configured as at least one longitudinal reinforcing element fixed on the intermediate portion of said solid supporting structure.

12. Rack according to one or more of the preceding claims 8 to 11, **characterized in that** said solid supporting structure bent in the shape of a channel comprises structural stiffening means configured as at least one transverse reinforcing element fixed on the intermediate portion of said solid supporting structure.

**Patentansprüche**

1.  Verfahren zur Herstellung eines Werkstückträgers für den industriellen Einsatz, umfassend die Phasen, die aus Folgendem bestehen:

    - Bereitstellen einer Form mit einem Hohlraum, der die Form des fertigen Trägers negativ wiedergibt;
    - Bereitstellen einer festen Stützstruktur durch Schneiden, entsprechend einer vorbestimmten Länge, und Biegen eines Metallprofils mit einer vorbestimmten Dicke in Form eines Kanals mit einem im Wesentlichen "C"- oder "Omega"-förmigen Querschnitt;
    - Waschen des Formhohlraums;
    - Gießen einer vorbestimmten Menge an kaltem flüssigem Plastlsol In die Form;
    - Anordnen der besagten festen Stützstruktur in den Formhohlraum gemäß der Form, die in besagtem Hohlraum vorgesehen ist;
    - Einsetzen besagter Form in einen Ofen, der auf einer Temperatur zwischen 220 bis 350°C gehalten wird, um das Plastisol auf die erforderliche Härte zu härten;
    - Entfernen der Form aus dem Ofen und Abkühlen auf die Entnahmetemperatur und Entnehmen des fertigen Trägers, **gekennzeichnet durch** die Tatsache, dass es eine Phase umfasst, in der

    Folgendes geschieht:

    - besagte feste Stützstruktur, die in Form eines Kanals gebogen Ist, wird vor dem Einsetzen in die Form mit einer Oberflächenbeschichtung versehen, und bildet auf der festen Stützstruktur selbst einen Oberflächenbeschichtungsfilm durch Auftragen eines flüssigen Primers, anschließend stellt man besagte feste Struktur bei einer Temperatur von 220-300°C für 10-20 Minuten in den Ofen und lässt besagten Primerfilm trocknen, so dass der getrocknete Primer eng an besagter fester Struktur anhaftet.

2.  Verfahren gemäß Anspruch 1, **gekennzeichnet durch** die Tatsache, dass auf besagter fester Stützstruktur ein Primer-Oberflächenbeschichtungsfilm mit einer Dicke in einem Bereich von 20 bis 100 $\mu$m gebildet wird.

3.  Verfahren gemäß Anspruch 1 und/oder 2, **gekennzeichnet durch** die Tatsache, dass In den Formhohlraum vor dem Gießen des Plastisols eine Schicht Silikontrennmittel aufgebracht wird, um die Freigabe des aus dem Hohlraum gebildeten Trägers zu begünstigen.

4.  Verfahren gemäß Anspruch 1 und/oder 2, **gekennzeichnet durch** die Tatsache, dass besagter Primer, der Klebstoffe und Haftmittel umfasst, in flüssiger Form verwendet wird, rein oder verdünnt mit Nitroverdünner.

5.  Verfahren gemäß einem oder mehreren der vorhergehenden Ansprüche, **gekennzeichnet durch** die Tatsache, dass es weiterhin folgende Phasen umfasst:

    - Ausstatten der besagten Stützstruktur, die In Form eines Kanals gebogen Ist, mit mindestens einem Loch, bzw. mit mindestens einer Öffnung in ihrem Zwischenabschnitt,
    - Ausstoßen des In die Form gegossenen Plastisols durch das besagte mindestens ein Loch, bzw. durch die besagte mindestens eine Öffnung in den inneren Teil der besagten festen Stützstruktur und
    - Bildung, nach dem Abkühlen des gegossenen Plastisols, von mindestens einem entsprechenden hervorstehenden Körper in dem besagten inneren Teil der besagten festen Stützstruktur.

6.  Verfahren gemäß einem oder mehreren der vorhergehenden Ansprüche, **gekennzeichnet durch** die Tatsache, dass besagte feste Stützstruktur, die in Form eines Kanals gebogen ist, mit strukturellen Versteifungsmitteln versehen wird, die als mindestens ein Längsverstärkungselement konfiguriert sind, das auf dem Zwischenabschnitt der besagten festen Stützstruktur befestigt ist.

**7.** Verfahren gemäß einem oder mehreren der vorhergehenden Ansprüche, **gekennzeichnet durch** die Tatsache, dass besagte feste Stützstruktur, die in Form eines Kanals gebogen Ist, mit strukturellen Versteifungsmitteln versehen wird, die als mindestens ein Querverstärkungselement konfiguriert sind, das auf dem Zwischenabschnitt der besagten festen Tragkonstruktion befestigt ist.

**8.** Werkstückträger für den Industriellen Einsatz, erhalten durch das Verfahren gemäß einem oder mehreren der Ansprüche von 1 bis 7, **gekennzeichnet durch** die Tatsache, dass besagte feste Stützstruktur in Form eines Kanals einen Oberflächenbeschlchtungsfilm umfasst, der durch einen getrockneten Primer gebildet wird und eine Dicke in einem Bereich zwischen 20 - 100 $\mu$m aufweist.

**9.** Träger gemäß Anspruch 8, **gekennzeichnet durch** die Tatsache, dass besagter Primer Klebstoffe und Haftmittel umfasst.

**10.** Träger gemäß einem oder mehreren der Ansprüche 8 und/oder 9, **gekennzeichnet durch** die Tatsache, dass besagte feste Stützstruktur, die In Form eines Kanals gebogen ist, mit mindestens einem Loch, bzw. mit mindestens einer Öffnung in ihrem Zwischenabschnitt versehen ist, und **gekennzeichnet durch** die Tatsache, dass er In Übereinstimmung mit dem besagten mindestens einen Loch, bzw. der besagten mindestens einen Öffnung im inneren Tell der besagten festen Stützstruktur einen entsprechenden hervorstehenden Körper umfasst, der mittels des besagten gegossenen und gekühlten Plastisols gebildet wird.

**11.** Träger gemäß einem oder mehreren der vorhergehenden Ansprüche von 8 bis 10, **gekennzeichnet durch** die Tatsache, dass besagte feste Stützstruktur, die in Form eines Kanals gebogen ist, strukturelle Versteifungsmittel umfasst, die als mindestens ein Längsverstärkungselement konfiguriert sind, das auf dem Zwischenabschnitt der besagten festen Stützstruktur befestigt ist.

**12.** Träger gemäß einem oder mehreren der vorhergehenden Ansprüche von 8 bis 11, **gekennzeichnet durch** die Tatsache, dass besagte feste Stützstruktur, die in Form eines Kanals gebogen Ist strukturelle Versteifungsmittel umfasst, die als mindestens ein Querverstärkungselement konfiguriert sind, das auf dem Zwischenabschnitt der besagten festen Stützstruktur befestigt Ist.


**Revendications**

**1.** Procédé de fabrication d'un râtelier stockage à usage industriel, comprenant les étapes consistant à:

- fournir un moule ayant une cavité qui reproduit, en négatif, la forme du râtelier fini;
- fournir une structure de support résistante par cisaillement, selon une longueur prédéterminée, et pliage d'un profilé métallique, ayant une épaisseur prédéterminée, en forme de gouttière avec une section essentiellement en « C » ou en « oméga » ;
- laver la cavité du moule;
- couler à froid, dans le moule, du plastisol à l'état liquide, en quantité prédéterminée;
- disposer, dans ladite cavité de moule, ladite structure de support résistante, selon la forme prévue dans ladite cavité;
- Introduire ledit moule dans un four maintenu à une température comprise entre 220 et 350 °C pour le durcissement du plastisol jusqu'à la dureté requise;
- retirer du four et faire refroidir le moule jusqu'à la température d'extraction et extraire le râtelier fini,

**caractérisé par le fait qu'**il comprend une étape où:

- ladite structure de support résistante pliée en forme de gouttière est dotée d'un revêtement de surface, avant l'introduction dans le moule, formant un film de revêtement de surface sur la structure de support résistante par application d'un apprêt sous forme liquide, puis en disposant ladite structure résistante au four, à une température de 220 à 300 °C pendant 10 à 20 minutes, et en faisant sécher ledit film d'apprêt, de sorte que l'apprêt séché adhère étroitement à ladite structure résistante.

**2.** Procédé selon la revendication 1, **caractérisé par le fait qu'**un film de revêtement de surface d'apprêt ayant une épaisseur comprise dans un intervalle de 20 à 100 $\mu$m est formé sur ladite structure de support résistante.

**3.** Procédé selon la revendication 1 et/ou 2, **caractérisé par le fait qu'**une couche d'agent de démoulage au silicone est appliquée dans la cavité du moule, avant la coulée du plastisol, pour favoriser le démoulage du râtelier formé par la cavité même.

**4.** Procédé selon la revendication 1 et/ou 2, **caractérisé par le fait que** ledit apprêt, comprenant des colles et des adhésifs, est utilisé sous forme liquide, pur ou dilué avec un diluant nitro.

**5.** Procédé selon une ou plusieurs des revendications précédentes, **caractérisé par le fait qu'**il comprend également les étapes de:

- doter ladite structure de support résistante pliée en forme de gouttière d'au moins un trou, respectivement d'au moins une ouverture dans sa portion intermédiaire,
- faire sortir le plastisol coulé à l'intérieur du moule, à travers ledit trou au minimum, respectivement par ladite ouverture au minimum, dans la partie interne de ladite structure de support résistante et
- former, après le refroidissement du plastisol coulé, au moins un corps correspondant en saillie dans ladite partie interne de la ladite structure de support résistante.

**6.** Procédé selon une ou plusieurs des revendications précédentes, **caractérisé par le fait que** ladite structure de support résistante pliée en forme de gouttière est dotée de moyens de raidissement structurel configurés comme au moins un élément de renfort longitudinal fixé sur la portion intermédiaire de ladite structure de support résistante.

**7.** Procédé selon une ou plusieurs des revendications précédentes, **caractérisé par le fait que** ladite structure de support résistante pliée en forme de gouttière est dotée de moyens de raidissement structurel configurés comme au moins un élément de renfort transversal fixé sur la portion intermédiaire de ladite structure de support résistante.

**8.** Râtelier de stockage à usage industriel obtenu avec le procédé selon une ou plusieurs des revendications de 1 à 7, **caractérisé par le fait que** ladite structure de support résistante en gouttière comprend un film de revêtement de surface formé par un apprêt séché et ayant une épaisseur comprise dans un intervalle de 20 à 100 $\mu$m.

**9.** Râtelier selon la revendication 8, **caractérisé par le fait que** ledit apprêt comprend des colles et des adhésifs.

**10.** Râtelier selon une ou plusieurs des revendications 8 et/ou 9, **caractérisé par le fait que** ladite structure de support résistante pliée en forme de gouttière est dotée d'au moins un trou, respectivement d'au moins une ouverture dans sa portion Intermédiaire, et **par le fait qu'**elle comprend, au niveau dudlt trou au minimum, respectivement de ladite ouverture au minimum, dans la partie interne de ladite structure de support résistante, un corps en saillie formé par le plastisol coulé et refroidi.

**11.** Râtelier selon une ou plusieurs des revendications précédentes de 8 à 10, **caractérisé par le fait que** ladite structure de support résistante pliée en forme de gouttière comprend des moyens de raidissement structurel configurés comme au moins un élément de renfort longitudinal fixé sur la portion intermédiaire de ladite structure de support résistante.

**12.** Râtelier selon une ou plusieurs des revendications précédentes de 8 à 11, **caractérisé par le fait que** ladite structure de support résistante pliée en forme de gouttière comprend des moyens de raidissement structurel configurés comme au moins un élément de renfort transversal fixé sur la portion intermédiaire de ladite structure de support résistante.

FIG. 1

FIG. 2

FIG. 3

FIG. 4

**EP 3 338 985 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4297197 A
- US 3446361 A
- GB 2240318 A
- WO 2015017408 A2

### Non-patent literature cited in the description

- **ANONYMOUS.** *APPLICATIONS OF PRIMERS AND VINYL PLASTISOLS,* 06 October 2010, 1-5, http://www.polyone.com/files/resources/Applications_of_Primers_and_Vinyl_Plastisols_TAB_SC005.pdf